(19) Europäisches Patentamt
European Patent Office
Office européen des brevets

(11) **EP 2 518 030 A1**

(12) **EUROPEAN PATENT APPLICATION**
published in accordance with Art. 153(4) EPC

(43) Date of publication:
**31.10.2012 Bulletin 2012/44**

(21) Application number: **10834516.6**

(22) Date of filing: **24.11.2010**

(51) Int Cl.:
*C03C 3/06* (2006.01)    *C03B 20/00* (2006.01)
*C03C 3/089* (2006.01)    *C03C 3/097* (2006.01)
*G03F 1/16* (0000.00)    *H01L 21/027* (2006.01)

(86) International application number:
**PCT/JP2010/070944**

(87) International publication number:
**WO 2011/068064 (09.06.2011 Gazette 2011/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.12.2009 JP 2009273340**

(71) Applicant: **Asahi Glass Company, Limited
Chiyoda-ku
Tokyo 100-8405 (JP)**

(72) Inventors:
• **KOIKE Akio
  Tokyo 100-8405 (JP)**
• **MITSUMORI Takahiro
  Tokyo 100-8405 (JP)**
• **OGAWA Tomonori
  Tokyo 100-8405 (JP)**

(74) Representative: **Müller-Boré & Partner
Patentanwälte
Grafinger Straße 2
81671 München (DE)**

(54) **SILICA GLASS CONTAINING TIO2**

(57)    The present invention relates to a $TiO_2$-containing silica glass containing $TiO_2$ in an amount of from 5 to 10 mass% and at least one of $B_2O_3$, $P_2O_5$ and S in an amount of from 50 ppb by mass to 5 mass% in terms of the total content.

FIG. 1

**Description**

TECHNICAL FIELD

The present invention relates to a $TiO_2$-containing silica glass (hereinafter referred to as "$TiO_2$-$SiO_2$ glass" in the present description), and in particular, to a $TiO_2$-$SiO_2$ glass used as an optical member of an exposure tool for EUV lithography. The EUV (extreme ultraviolet) light as referred to in the present invention means light having a wavelength in a soft X-ray region or a vacuum ultraviolet region, specifically light having a wavelength of from about 0.2 to 100 nm.

BACKGROUND ART

In the photolithography technology, an exposure tool for manufacturing an integrated circuit by transferring a minute circuit pattern onto a wafer has hitherto been widely utilized. With the trend toward a higher degree of integration and higher function of an integrated circuit, the refinement of the integrated circuit is advancing. The exposure tool is hence required to form a circuit pattern image with high resolution on a wafer surface at a long focal depth, and shortening of the wavelength of an exposure light source is being advanced. The exposure light source is further advancing from conventional g-line (wavelength: 436 nm), i-line (wavelength: 365 nm) and a KrF excimer laser (wavelength: 248 nm), and an ArF excimer layer (wavelength: 193 nm) is coming to be employed. Also, in order to cope with a next-generation integrated circuit whose line width of the circuit pattern will become 70 nm or less, an immersion lithography technique and a double exposure technique, each using an ArF excimer laser, are regarded as being leading. However, it is considered that even these techniques would be able to cover only the generation with a line width of up to 45 nm.

Under the foregoing technical trends, a lithography technique using, as an exposure light source, light having a wavelength of 13 nm to represent EUV light (extreme ultraviolet light) is considered to be applicable over generation in which a line width of the circuit pattern is 32 nm and thereafter, and is attracting attention. The principle of image formation of EUV lithography (hereinafter referred to as "EUVL") is identical with that of the conventional lithography from the viewpoint that a mask pattern is transferred using a projection optical system. However, since there is no material capable of transmitting light therethrough in the EUV light energy region, a refractive optical system cannot be used. Accordingly, the optical systems are all reflecting optical systems.

The optical member of an exposure tool for EUVL includes a photomask and a mirror and is basically configured with (1) a substrate, (2) a reflective multilayer formed on the substrate and (3) an absorber layer formed on the reflective multilayer. For the reflective multilayer, forming an Mo/Si reflective multilayer in which an Mo layer and an Si layer are alternately laminated is investigated; and for the absorber layer, Ta and Cr are investigated as a layer-forming material. For the substrate, a material having a low coefficient of thermal expansion is required so as not to generate a strain even under irradiation with EUV light, and a glass having a low coefficient of thermal expansion or the like is investigated.

The $TiO_2$-$SiO_2$ glass is known as an extremely low thermal expansion material having a coefficient of thermal expansion (coefficient of thermal expansion: CTE) lower than that of a silica glass. Also, since the coefficient of thermal expansion can be controlled by the $TiO_2$ content in glass, a zero-expansion glass whose coefficient of thermal expansion is close to 0 can be obtained. Accordingly, the $TiO_2$-$SiO_2$ glass involves a possibility as a material to be used in an optical member (optical member for EUVL) of an exposure tool for EUVL.

However, one of the drawbacks of the $TiO_2$-$SiO_2$ glass body is that the glass body has striae (see, Patent Document 1). Striae are a compositional inhomogeneity (composition distribution) which adversely affects light transmission in an optical member for EUVL produced using the glass body. Striae can be measured by a microprobe that measures compositional variations correlating to coefficient of thermal expansion variations of a few ppb/°C.

Striae have been found to sometimes exert a strong effect when an EUVL optical member for EUVL produced using a $TiO_2$-$SiO_2$ glass body is finished to have a surface roughness (PV value) of a several nanometer level. This is a problem, because the optical surface of an optical member for EUVL must be finished to have a very low surface roughness (PV value). Here, the optical surface of an optical member for EUVL indicates a deposition surface on which a reflective multilayer film is formed at the time of producing a photomask or a mirror by using the optical member for EUVL. In this connection, the profile of the optical surface differs depending on the usage of the optical member for EUVL. In the case of an optical member for EUVL for use in the production of a photomask, the optical surface is usually a flat surface, whereas in the case of an optical member for EUVL for use in the production of a mirror, the optical surface is a curved surface in many cases.

Accordingly, in order to use a $TiO_2$-$SiO_2$ glass body for an optical member for EUVL, striae must be reduced.

Patent Document 1 discloses that generation of striae can be reduced by incorporating from 0.0001 to 1 mass% of a viscosity-reducing dopant into a $TiO_2$-$SiO_2$ glass having a $TiO_2$ content of from 5 to 12 mass%. Patent Document 1 discloses, as the viscosity-reducing dopant, a metal or a nonmetal dopant selected from the group consisting of an alkali, an alkaline earth, aluminum, fluorine and other metals (La, Y, Zr, Zn, Sn, Sb, and P) that do not produce strong coloration, and an alkali metal selected from the group consisting of K, Na, Li, Cs, and Rb.

However, the TiO$_2$-SiO$_2$ glass described in Patent Document 1 contains a component having characteristics improper for use as an optical substrate for EUVL. Specifically, an alkali metal and an alkaline earth metal have a problem that growth of cristobalite as a crystal phase of SiO$_2$ or growth of rutile or anatase as a crystal phase of TiO$_2$ readily occurs in the glass forming process and generation of so-called devitrification is involved. Furthermore, these components are responsible also for the problem of an inclusion such as foreign matter and bubble in the produced TiO$_2$-SiO$_2$ glass. As for aluminum, La, Y, Zr and the like, it is considered that when an oxide thereof is contained in the glass, the viscosity of the glass is rather increased and generation of striae cannot be prevented.

RELATED ART

PATENT DOCUMENT

Patent Document 1: JP-A-2008-037743

SUMMARY OF THE INVENTION

PROBLEMS THAT THE INVENTION IS TO SOLVE

In order to solve those problems of the above conventional techniques, an object of the present invention is to provide a TiO$_2$-SiO$_2$ glass suitable for an optical member for EUVL, which can be prevented from generation of striae without causing a problem of devitrification or inclusion.

MEANS FOR SOLVING THE PROBLEMS

With the aim of solving the above-mentioned problems, the present invention provides a TiO$_2$-containing silica glass (hereinafter referred to as "TiO$_2$-SiO$_2$ glass of the present invention") containing TiO$_2$ in an amount of from 5 to 10 mass% and at least one of BzO$_3$, P$_2$O$_5$ and S in an amount of from 50 ppb by mass to 5 mass% in terms of the total content.
The TiO$_2$-containing silica glass of the present invention preferably has an annealing temperature of 1,100°C or lower and an OH concentration of 600 ppm or less.
The TiO$_2$-containing silica glass of the present invention preferably has a standard deviation (dev[$\sigma$]) of a stress generated by striae of 0.03 MPa or less.
The TiO$_2$-containing silica glass of the present invention preferably has a difference ($\Delta\sigma$) between the maximum value and the minimum value of the stress generated by striae of 0.20 MPa or less.
Further, the present invention provides an optical member for EUV lithography, using the TiO$_2$-containing silica glass of the present invention.

ADVANTAGES OF THE INVENTION

The TiO$_2$-SiO$_2$ glass of the present invention can be prevented from generation of striae without causing a problem of devitrification or inclusion and therefore, is very suitable as an optical member for EUVL.

BRIEF DESCRIPTION OF THE DRAWINGS

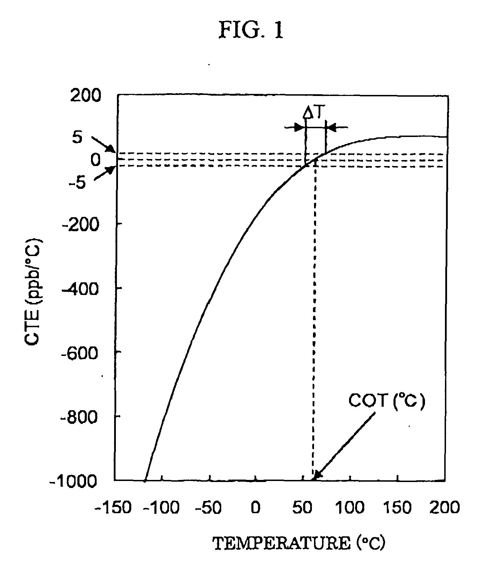

[Fig. 1] Fig. 1 is a graph plotting the relationship between CTE and temperature.

MODE FOR CARRYING OUT THE INVENTION

The TiO$_2$-SiO$_2$ glass of the present invention is described below.
The TiO$_2$-SiO$_2$ glass of the present invention contains TiO$_2$ in an amount of from 5 to 10 mass% and at least one of B$_2$O$_3$, P$_2$O$_5$ and S in an amount of from 50 ppb by mass to 5 mass% in terms of the total content.
It is in the temperature region which can be experienced by a TiO$_2$-SiO$_2$ glass in use as an optical member for EUVL that the TiO$_2$-SiO$_2$ glass of the present invention is required to have a low coefficient of thermal expansion. From this viewpoint, the TiO$_2$-SiO$_2$ glass has a temperature (Cross-over Temperature; COT) at which the coefficient of thermal expansion (CTE) becomes 0 ppb/°C being preferably from 15 to 110°C.

Also, in the $TiO_2$-$SiO_2$ glass of the present invention, the temperature width $\Delta T$ in which the coefficient of thermal expansion (CTE) becomes $0 \pm 5$ ppb/°C is preferably 5°C or more. If $\Delta T$ is less than 5°C, in using the $TiO_2$-$SiO_2$ glass as an optical member of an exposure device for EUVL, thermal expansion of the optical member at the irradiation with EUV light may become a problem. The temperature width is more preferably 6°C or more, still more preferably 8°C or more, and yet still more preferably 15°C or more.

In the case of using the $TiO_2$-$SiO_2$ glass of the present invention as an optical member for EUVL, the coefficient of thermal expansion (CTE) at the operating temperature is preferably $0 \pm 5$ ppb/°C. The operating temperature of the optical member for EUVL differs depending on the application but is from 19 to 25°C for a photomask and from 25 to 110°C for a mirror.

The $TiO_2$-$SiO_2$ glass is known to change in the coefficient of thermal expansion according to the $TiO_2$ content (P.C. Schultz and H.T. Smyth, in: R.W. Douglas and B. Ellis, Amorphous Materials, Willey, New York, page 453 (1972)). Therefore, COT and $\Delta T$ of the $TiO_2$-$SiO_2$ glass can be adjusted by controlling the $TiO_2$ content of the $TiO_2$-$SiO_2$ glass. However, it is necessary to keep in mind that the $TiO_2$-$SiO_2$ glass of the present invention contains at least one of $B_2O_3$, $P_2O_5$ and S. Since $B_2O_3$, $P_2O_5$ and S are a component that increases the coefficient of thermal expansion of glass, in order to have the same coefficient of thermal expansion as that of the $TiO_2$-$SiO_2$. glass not containing $B_2O_3$, $P_2O_5$ and S, the $TiO_2$ content needs to be set high as compared with the glass not containing $B_2O_3$, $P_2O_5$, S and the like.

Incidentally, COT and $\Delta T$ of the $TiO_2$-$SiO_2$ glass can be determined by measuring CTE of the $TiO_2$-$SiO_2$ glass by a known measuring method, for example, by means of a laser interferometric dilatometer, in the range of from -150 to +200°C and plotting the relationship between CTE and the temperature as shown in Fig. 1.

The $TiO_2$ content in the $TiO_2$-$SiO_2$ glass of the present invention is from 5 to 10 mass%. If the $TiO_2$ content is less than 5 mass% or exceeds 10 mass%, COT may not be present in the temperature range of from 15 to 110°C. Specifically, if the $TiO_2$ content is less than 5 mass%, COT tends to become less than 15°C. Also, if the $TiO_2$ content exceeds 10 mass%, COT tends to exceed 110°C. Furthermore, there is a possibility that a crystal such as rutile is readily precipitated or a bubble is liable to remain.
The $TiO_2$ content is preferably from 5.5 to 8 mass% and more preferably from 6 to 7 mass%.

In the $TiO_2$-$SiO_2$ glass of the present invention, $B_2O_3$, $P_2O_5$ and S are contained in an amount of from 50 ppb by mass to 5 mass% in terms of the total content so as to reduce the viscosity of the glass and prevent generation of striae. Since striae of the glass are attributable to the composition distribution, when the viscosity of the glass is decreased, diffusion of various components in the glass is promoted in the heating step performed in the process of producing the glass and the composition distribution is narrowed, as a result, striae are reduced. Accordingly, when at least one of $B_2O_3$, $P_2O_5$ and S is contained as a component for decreasing the viscosity of the glass, this makes it easy to reduce striae of the glass.
$B_2O_3$, $P_2O_5$ and S are themselves a component forming a network of the glass and therefore, unlike an alkali metal, an alkaline earth metal and the like used as a viscosity reducing dopant in Patent Document 1, those components do not cause growth of cristobalite as a crystal phase of $SiO_2$ or growth of rutile or anatase as a crystal phase of $TiO_2$ in the forming step of the glass, as a result, the problem of devitrification is eliminated. Also, the produced $TiO_2$-$SiO_2$ glass is free from the generation of an inclusion such as foreign matter and bubble.
In view of the effect of decreasing the viscosity of the glass and preventing generation of striae, among those three components above, it is more preferred to contain $B_2O_3$.

In the $TiO_2$-$SiO_2$ glass of the present invention, if the total content of $B_2O_3$, $P_2O_5$ and S is less than 50 ppb by mass, the effect of decreasing the viscosity of the glass becomes insufficient and generation of striae cannot be prevented. The total content is preferably 1 ppm by mass or more, more preferably 100 ppm by mass or more, and still more preferably 0.1 mass% or more.
On the other hand, if the total content of $B_2O_3$, $P_2O_5$ and S exceeds 5 mass%, there is a possibility that the coefficient of thermal expansion becomes large. The total content is preferably less than 2 mass% and more preferably less than 1 mass%.

In the $TiO_2$-$SiO_2$ glass of the present invention, apart from $TiO_2$, $B_2O_3$, $P_2O_5$, and S, the balance is $SiO_2$, but a component other than $TiO_2$, $B_2O_3$, $P_2O_5$, S, and $SiO_2$ may be incorporated. Examples of this component include a halogen such as F and Cl Similarly to addition of $B_2O_3$ and $P_2O_5$, the addition of a halogen has an effect of decreasing the viscosity of the glass and contributes to preventing generation of striae. Also, the thermal expansion characteristics are improved by the addition of a halogen. Specifically, this addition produces an effect of, for example, decreasing the coefficient of thermal expansion or broadening $\Delta T$. Among halogens, F having a high effect of decreasing the viscosity is preferably used.

However, F readily volatilizes, and a composition distribution may be thereby formed. In order to prevent the formation of a composition distribution due to volatilization of F, the content of F is preferably less than 50 ppm, and it is more preferred to substantially not contain this component.

The F concentration can be measured by a known method and, for example, can be measured through the

following procedure. The $TiO_2$-$SiO_2$ glass is heated and melted in anhydrous sodium carbonate and to the obtained melt are added distilled water and hydrochloric acid each in a volume ratio of 1 based on the melt, to prepare a sample solution. The electromotive force of the sample solution is measured by a radiometer by using a fluorine F ion selective electrode and, as a comparative electrode, each of No. 945-220 and No. 945-468 manufactured by Radiometer Trading, and the F content is determined based on a calibration curve previously prepared by using an F ion standard solution (Journal of Chemical Society of Japan, 1972 (2), 350). Here, the detection limit in this method is 10 ppm.

When OH concentration in the $TiO_2$-$SiO_2$ glass is high, it is not preferred because a fictive temperature distribution is liable to be generated. Because, OH is present as a terminal group (OH group) cutting the network in the network structure of the glass and it is considered that as the number of terminal groups is larger, structural relaxation of the glass is more accelerated. That is, as the OH concentration is higher, the structural relaxation time is shorter and the fictive temperature is more susceptible to the temperature distribution in the $TiO_2$-$SiO_2$ glass, which is generated during cooling.

For the above reasons, the OH concentration of the $TiO_2$-$SiO_2$ glass of the present invention is preferably 600 ppm by mass or less, more preferably 200 ppm by mass or less, and still more preferably 50 ppm by mass or less.

The OH concentration of the $TiO_2$-$SiO_2$ glass can be measured by using a known method. For example, the OH concentration can be determined from an absorption peak at a wavelength of 2.7 $\mu$m after performing measurement by an infrared spectrophotometer (J.P. Williams, et al., American Ceramic Society Bulletin, 55(5), 524, 1976). The detection limit in this method is 0.1 ppm.

The effect obtained by containing at least one of $B_2O_3$, $P_2O_5$ and S in the $TiO_2$-$SiO_2$ glass of the present invention, that is, reduction in the viscosity of the glass, can be confirmed as a decrease of annealing temperature. Here, the annealing temperature means a temperature at which the viscosity $\eta$ of the glass becomes $10^{13}$ dPa·s. The annealing temperature can be determined by measuring the viscosity of the glass by a beam bending method with a method in accordance with JIS R 3103-2:2001. In the $TiO_2$-$SiO_2$ glass of the present invention, the annealing temperature is preferably 1,120°C or lower from the standpoint of reducing striae, more preferably 1,100°C or lower, still more preferably 1,050°C or lower, and yet still more preferably 1,000°C or lower.

In this connection, when the annealing temperature is 1,120°C or lower, this is also preferred in terms of facilitating the lowering of the fictive temperature.

In the $TiO_2$-$SiO_2$ glass of the present invention, the fictive temperature is preferably 1,100°C or lower. If the fictive temperature exceeds 1,100°C, $\Delta T$ becomes narrow and can be hardly 5°C or more. The fictive temperature is more preferably 1,000°C or lower and still more preferably 950°C or lower. For more broadening $\Delta T$, the fictive temperature is preferably 900°C or lower, more preferably 850°C or lower, and still more preferably 800°C or lower.

The fictive temperature of the $TiO_2$-$SiO_2$ glass can be measured by a known procedure. In Examples described later, the fictive temperature of the $TiO_2$-$SiO_2$ glass was measured through the following procedure.

With respect to a mirror polished $TiO_2$-$SiO_2$ glass, an absorption spectrum is obtained by using an infrared spectrometer (in Examples described later, Magna 760 manufactured by Nikolet was used). At this time, the data intervals are set to about 0.5 cm$^{-1}$, and an average value of 64 scannings is used as the absorption spectrum. In the thus-obtained infrared absorption spectrum, the peak observed in the vicinity of about 2,260 cm$^{-1}$ is derived from a harmonic overtone of stretching vibration of Si-O-Si bond of the $TiO_2$-$SiO_2$ glass. By using this peak position, a calibration curve is created using glasses each having a known fictive temperature and having the same composition, and the fictive temperature is determined. Alternatively, the reflection spectrum of the surface is measured in the same manner by using the same infrared spectrometer. In the thus-obtained infrared reflection spectrum, the peak observed in the vicinity of about 1,120 cm$^{-1}$ is derived from stretching vibration of Si-O-Si bond of the $TiO_2$-$SiO_2$ glass. By using this peak position, a calibration curve is created using glasses each having a known fictive temperature and having the same composition, and the fictive temperature is determined. Incidentally, a shift of the peak position due to change of the glass composition can be extrapolated from the composition dependency of the calibration curve.

In the $TiO_2$-$SiO_2$ glass of the present invention, the fictive temperature variation is preferably within 50°C and more preferably within 30°C. If the fictive temperature variation exceeds the range above, a difference may arise in the coefficient of thermal expansion depending on the location.

In the present description, the "fictive temperature variation" is defined as a difference between the maximum value and the minimum value of the fictive temperature within 30 mm x 30 mm in at least one plane.

The fictive temperature variation can be measured as follows. The $TiO_2$-$SiO_2$ glass is formed into a predetermined size and sliced to make a $TiO_2$-$SiO_2$ glass block of 50 mmx50 mm×1 mm, and the 50 mm×50 mm plane of the $TiO_2$-$SiO_2$ glass block is measured for the fictive temperature at intervals of a 10 mm pitch according to the above-described method, whereby the fictive temperature variation of the $TiO_2$-$SiO_2$ glass is determined.

In the $TiO_2$-$SiO_2$ glass of the present invention, standard deviation (dev[$\sigma$]) of the stress generated by striae is preferably 0.03 MPa or less within an area of 30 mm×30 mm in at least one plane. If the standard deviation exceeds 0.03 MPa, the surface roughness after polishing is increased, and an ultrahigh smoothness as high as surface smoothness (rms)≤1 nm may not be obtained. The standard deviation is more preferably 0.02 MPa or less, still more preferably 0.01 MPa or less.

In the $TiO_2$-$SiO_2$. glass of the present invention, difference ($\Delta\sigma$) between the maximum value and the minimum value of the stress generated by striae is preferably 0.20 MPa or less within an area of 30 mmx30 mm in at least one plane. If this difference exceeds 0.20 MPa, an outstanding composition distribution is created in the glass, and portions differing in the mechanical properties and chemical properties are generated in the glass, failing in making the polishing rate constant. In tum, the surface roughness after polishing is increased, and an ultrahigh smoothness as high as surface smoothness (rms)≤1 nm may not be obtained. The difference is more preferably 0.17 MPa or less, still more preferably 0.15 MPa or less, and yet still more preferably 0.10 MPa or less..

In the $TiO_2$-$SiO_2$ glass of the present invention, root mean square (RMS) of the stress level of striae is preferably 0.20 MPa or less within an area of 30 mm×30 mm in at least one plane. If the root mean square exceeds 0.20 MPa, the surface roughness after polishing may be increased, and an ultrahigh smoothness as high as surface smoothness (rms)≤1 nm may not be obtained. The root mean square is more preferably 0.17 MPa or less, still more preferably 0.15 MPa or less, and yet still more preferably 0.10 MPa or less.

The stress of striae of the $TiO_2$-$SiO_2$ glass can be obtained according to the following formula after determining retardation by a known method, for example, by measuring a region of about 1 mm×1 mm with use of a birefringent microscope.

$$\Delta = C \times F \times n \times d$$

Here, $\Delta$ is retardation, C is photoelastic constant, F is stress, n is refractive index, and d is sample thickness.
A stress profile is determined by the method above and from the profile, the standard deviation (dev[$\sigma$]), the difference ($\Delta\sigma$) between the maximum value and the minimum value, and the root mean square (RMS) can be obtained. More specifically, for example, a cube of about 40 mm×40 mm×40 mm is cut out from the $TiO_2$-$SiO_2$ glass, and the cube is sliced at each plane to a thickness of about 1 mm and polished to obtain a plate-shaped $TiO_2$-$SiO_2$ glass block of 30 mm×30 mm×0.5 mm. In a birefringent microscope, helium neon laser light is vertically applied to the 30 mm×30 mm plane of this glass block, and the retardation distribution in the plane is examined at an enlarged magnification large enough to sufficiently observe the striae and converted into a stress distribution. In the case where the pitch of striae is fine, the thickness of the plate-shaped $TiO_2$-$SiO_2$ glass block measured must be made thin.

In the $TiO_2$-$SiO_2$ glass of the present invention, fluctuation width ($\Delta$n) of refractive index within an area of 30 mm×30 mm in at least one plane is preferably $4.0\times10^{-4}$ or less. If the fluctuation width exceeds $4.0\times10^{-4}$, the surface roughness after polishing may be increased, and an ultrahigh smoothness as high as surface smoothness (rms)≤1 nm may not be obtained. The fluctuation width is more preferably $3.5\times10^{-4}$ or less and still more preferably $3.0\times10^{-4}$ or less. In particular, in order to attain the ultrahigh smoothness (surface smoothness (rms)≤2 nm), the fluctuation width ($\Delta$n) of refractive index is preferably $2\times10^{-4}$ or less, more preferably $1\times10^{-4}$ or less, and still more preferably $0.5\times10^{-4}$ or less.

As for the measuring method of the fluctuation width $\Delta$n of refractive index, the measurement can be performed by a known method, for example, by using an optical interferometer. More specifically, for example, a cube of about 40 mm×40 mm×40 mm is cut out from the $TiO_2$-$SiO_2$ glass, and the cube is sliced at each plane to a thickness of about 0.5 mm and then polished to obtain a plate-shaped $TiO_2$-$SiO_2$ glass block of 30 mm×30 mm×0.2 mm. In a small-aperture Fizeau interferometer, only light at a specific wavelength is taken out of white light by using a filter and vertically applied to the 30 mm×30 mm plane of this glass block, and the refractive index distribution in the plane is examined at an enlarged magnification large enough to sufficiently observe the striae, thereby measuring the fluctuation width $\Delta$n of refractive index. In the case where the pitch of striae is fine, the thickness of the plate-shaped $TiO_2$-$SiO_2$ glass block measured must be made thin.

In the case of evaluating the striae by using the above-described birefringent microscope or optical interferometer, the size of one pixel in CCD may be not sufficiently small as compared with the width of striae, and the striae may not be detected. In this case, it is preferred that the entire region within an area of 30 mm×30 mm is divided into a plurality of microregions of, for example, about 1 mm×1 mm and the measurement is performed in each microregion.

In the $TiO_2$-$SiO_2$ glass of the present invention, fluctuation width of $TiO_2$ concentration (difference between the maximum value and the minimum value of the $TiO_2$ concentration) within an area of 30 mm×30 mm in one plane is preferably 0.06 mass% or less. If the fluctuation width exceeds 0.06 mass%, surface roughness after polishing is increased and an ultrahigh smoothness as high as surface smoothness (rms)≤1 nm may not be obtained. The fluctuation width is more preferably 0.04 mass% or less.

In the case of using the $TiO_2$-$SiO_2$ glass of the present invention as an optical member of an exposure device for EUVL, the fluctuation width of $TiO_2$. concentration (difference between the maximum value and the minimum value of the $TiO_2$ concentration) in the plane for optical use is preferably 0.13 mass% or less. If the fluctuation width exceeds 0.13 mass%, CTE variation may become excessively large. The fluctuation width is more preferably 0.10 mass% or less, still more preferably 0.06 mass% or less, and yet still more preferably 0.04 mass% or less.

The fluctuation width of $TiO_2$ concentration (difference between the maximum value and the minimum value of the $TiO_2$ concentration) is calculated from the maximum value and the minimum value in the composition distribution determined using an electron beam probe microanalyzer (EPMA).

The production method for the $TiO_2$-$SiO_2$ glass includes the following several methods. In one production method, $TiO_2$-$SiO_2$ glass fine particles (soot) obtained by flame hydrolysis or thermal decomposition of a silica precursor and a titania precursor each serving as a glass-forming raw material is deposited and grown by a soot process to obtain a porous $TiO_2$-$SiO_2$ glass body. The obtained porous $TiO_2$-$SiO_2$ glass body is heated to a temperature of densification temperature or higher under reduced pressure or in a helium atmosphere and further heated to a temperature of transparent vitrification temperature or higher, thereby obtaining $TiO_2$-$SiO_2$ glass.

The $TiO_2$-$SiO_2$ glass of the present invention contains at least one of $B_2O_3$, $P_2O_5$ and S and therefore, the $TiO_2$-$SiO_2$ glass fine particle (soot) is produced by simultaneously mixing and supplying at least one of their precursors, that is, a $B_2O_3$ precursor, a $P_2O_5$ precursor and an S precursor in addition to the silica precursor and the titania precursor.

Examples the $B_2O_3$ precursor which can be used include $BCl_3$ and $BF_3$. Examples of the $P_2O_5$ precursor which can be used include a phosphorus oxyhalide such as $POCl_3$, and a trialkyl phosphate such as $P(CH_3O)3$. Examples of the S precursor which can be used include $SCl_2$ and $SF_6$.

The soot process includes an MCVD process, an OVD process, a VAD process and the like according to the preparation manner.

Also, there is a production method where a silica precursor and a titania precursor each serving as a glass-forming raw material are hydrolyzed-oxidized in an oxyhydrogen flame of from 1,800 to 2,000°C to obtain $TiO_2$-$SiO_2$ glass by a direct process. The $TiO_2$-$SiO_2$ glass of the present invention contains at least one of $B_2O_3$, $P_2O_5$ and S and therefore, the $TiO_2$-$SiO_2$ glass is obtained by simultaneously mixing and supplying at least one of their precursors, that is, a $B_2O_3$ precursor, a $P_2O_5$ precursor and an S precursor in addition to the silica precursor and the titania precursor.

In the present description, the densification temperature means a temperature at which the porous glass body can be densified to such an extent that a void cannot be confirmed by an optical microscope. Also, the transparent vitrification temperature means a temperature at which a crystal cannot be confirmed by an optical microscope and a transparent glass is obtained.

In the $TiO_2$-$SiO_2$ glass of the present invention, generation of striae is suppressed by containing at least one of $B_2O_3$, $P_2O_5$ and S as a component for reducing the viscosity of the glass. In order to prevent production of an inclusion such as crystal foreign matter, $B_2O_3$ or S is preferred. Also, for obtaining $TiO_2$-$SiO_2$ glass reduced in striae, it is preferred to further keep in mind the following points.

In order to obtain $TiO_2$-$SiO_2$ glass reduced in striae, the temperature of piping for conveying raw materials, particularly, piping for conveying a titania precursor, is preferably controlled tightly. In the case of gasifying the titania precursor in a high concentration by bubbling, it is effective for reduction of striae to set the piping at a higher temperature than the bubbling temperature such that the temperature rises as it comes closer to a burner.

Also, a temperature fluctuation in the piping may give rise to striae. For example, in the piping for conveying $TiCl_4$ at 0.5 m/sec, when the temperature of gas in a portion of piping having a length of 2 m fluctuates with a period of 30 seconds at 130°C$\pm$1.5°C, a composition fluctuation of 0.1 mass% is generated. Accordingly, in order to obtain $TiO_2$-$SiO_2$ glass reduced in striae, the temperature of piping for conveying a titania precursor is preferably kept to a fluctuation width within $\pm$1°C by PID control. The fluctuation width of temperature is more preferably within $\pm$0.5°C. Not only the piping for conveying a titania precursor, but also the temperature of piping for conveying a silica precursor is preferably kept to a fluctuation width within $\pm$1°C by PID control. The fluctuation width of temperature is more preferably within $\pm$0.5°C. For heating the piping, a flexible heater such as ribbon heater or rubber heater is preferably wound around the piping, because the piping is uniformly heated, but for achieving more uniform heating, the piping and the heater are preferably covered with an aluminum foil. Also, the outermost layer is preferably covered with a heat insulator such as urethane and heat-resistant fiber cloth. In addition, in order to reduce the composition fluctuation, the gas flow velocity in piping is preferably accelerated. The flow velocity is preferably 0.1 m/sec or more, more preferably 0.3 m/sec or more, still more preferably 0.5 m/sec or more, and yet still more preferably 1 m/sec or more, in terms of volume as converted into atmospheric pressure at the temperature there.

In order to uniformly supply a gas, a mechanism for stirring the gas is preferably provided before various precursors each serving as a glass raw material are supplied to a burner. As the stirring mechanism, two kinds of mechanisms may be considered, that is, one is a mechanism of fractionating the gas by a component such as static mixer and filter and combining the gas fractions, and another is a mechanism of supplying the gas after averaging fine fluctuations by introducing the gases into a large space. In order to obtain $TiO_2$-$SiO_2$ glass reduced in striae, the glass is preferably produced by using at least one of the above-described stirring mechanisms, and it is more preferred to use both. Also, out of stirring mechanisms, both a static mixer and a filter are preferably used.

For producing the $TiO_2$-$SiO_2$ glass of the present invention, a production method including the following steps (a) to (e) can be employed.

Step (a):

$TiO_2$-$SiO_2$ glass fine particles obtained by flame-hydrolyzing a silica precursor, a titania precursor and at least one precursor of $B_2O_3$, $P_2O_5$ and S, each serving as a glass-forming raw material, are deposited and grown on a substrate to form a porous $TiO_2$-$SiO_2$ glass body. Out of the glass-forming raw materials, the $B_2O_3$ precursor, the $P_2O_5$ precursor and the S precursor are as described above. The silica precursor includes a silicon halide compound, for example, a chloride such as $SiCl_4$, $SiHCl_3$, $SiH_2Cl_2$ and $SiH_3Cl$, a fluoride such as $SiF_4$, $SiHF_3$ and $SiH_2F_2$, a bromide such as $SiBr_4$ and $SiHBr_3$, and an iodide such as $SiI_4$; and an allcoxysilane represented by $R_nSi(OR)_{4-n}$ (wherein each R is independently an alkyl group having a carbon number of 1 to 4, and n is an integer of from 0 to 3). The titania precursor includes a titanium halide such as $TiCl_4$ and $TiBr_4$, and an alkoxytitanium represented by $R_nTi(OR)_{4-n}$ (wherein each R is independently an alkyl group having a carbon number of 1 to 4, and n is an integer of from 0 to 3). As the silica precursor and titania precursor, a compound of Si and Ti, such as silicon titanium double alkoxide, may be also used.
As the substrate, use can be made a silica glass-made seed rod (for example, the seed rod described in JP-B-63-24973). The substrate is not limited to a rod shape, but a plate-shaped substrate may be also used.

Step (b):

The porous $TiO_2$-$SiO_2$ glass body obtained in the step (a) is heated to densification temperature under reduced pressure of 13,000 Pa or less or in an atmosphere containing helium as the main component (50% or more) to obtain a $TiO_2$-$SiO_2$ dense body. The densification temperature is usually from 1,250 to 1,550°C, preferably from 1,300 to 1,500°C.

Step (c):

The $TiO_2$-$SiO_2$ dense body obtained in the step (b) is heated to transparent vitrification temperature to obtain a transparent $TiO_2$-$SiO_2$ glass body. The transparent vitrification temperature is usually from 1,350 to 1,800°C, preferably from 1,400 to 1,750°C.
The atmosphere is preferably an atmosphere of 100% of an inert gas such as helium and argon, or an atmosphere where an inert gas such as helium and argon is the main component (50% or more). The pressure may be reduced pressure or normal pressure. In the case of reduced pressure, the pressure is preferably 13,000 Pa or less.

Step (d):

The transparent $TiO_2$-$SiO_2$ glass body obtained in the step (c) is heated to a temperature of softening point or higher and formed into a desired shape to obtain a formed $TiO_2$-$SiO_2$ glass body. The forming temperature is preferably from 1,500 to 1,800°C. If the forming temperature is 1,500°C or lower, the transparent $TiO_2$-$SiO_2$ glass comes to have high viscosity and substantially fails in undergoing deformation by its own weight. Also, growth of cristobalite as a crystal phase of $SiO_2$ or growth of rutile or anatase as a crystal phase of $TiO_2$ occurs, and so-called devitrification is caused. If the forming temperature 1,800°C or more, sublimation of $SiO_2$ cannot be neglected.
It is also possible to perform the step (c) and the step (d) continuously or simultaneously.
In order to adjust the fictive temperature of the $TiO_2$-$SiO_2$ glass of the present invention to 1,100°C or lower, a method of holding the formed $TiO_2$-$SiO_2$ glass body formed into a desired shape in the step (d), at a temperature of 600 to 1,200°C for 2 hours or more, and then lowering the temperature to 700°C or lower at an average cooling rate of 10°C/hr or less, is effective. For more decreasing the fictive temperature, the temperature is preferably lowered at a rate of 5°C/hr, and still more preferably at a rate of 3°C/hr. When the temperature is lowered as a lower average cooling rate, a lower fictive temperature is achieved. For example, when the temperature is lowered at a rate of 1°C/hr or less, the fictive temperature can be 900°C or lower. In this case, the glass body is cooled at a low cooling rate only in the temperature range of 1,000 to 800°C, for example, at a rate of 1°C/hr or less, and in other temperature regions, cooled at a cooling rate of 5°C/hr or more, whereby the time can be shortened. The atmosphere here is preferably an atmosphere of 100% of an inert gas such as helium, argon, and nitrogen, an atmosphere containing this inert gas as the main component, or an air atmosphere. The pressure is preferably reduced pressure or normal pressure.

EXAMPLES

The present invention is described in greater detail below by referring to Examples, but the present invention is not limited thereto. Examples 1 to 3 are Examples of the invention, and others are Comparative Examples.

[Example 1]

TiO$_2$-SiO$_2$ glass fine particles obtained by mixing TiCl$_4$, SiCl$_4$ and BCl$_3$ as glass-forming raw materials each after gasification and thermal hydrolyzing the mixture in an oxyhydrogen flame (flame hydrolysis) was deposited and grown on a substrate to form a porous TiO$_2$-SiO$_2$ glass body (step (a)).

Since the obtained porous TiO$_2$-SiO$_2$ glass body was difficult to handle directly, the glass body in the state of being still deposited on the substrate was held at 1,200°C for 4 hours in the air and then removed from the substrate.

Thereafter, the porous TiO$_2$-SiO$_2$ glass body was placed in an electric furnace capable of controlling the atmosphere, and the pressure was reduced to 10 Torr at room temperature. Subsequently, the temperature was raised to 1,450°C in a helium gas atmosphere, and the system was held at this temperature for 4 hours to obtain a TiO$_2$-SiO$_2$ dense body (step (b)).

The obtained TiO$_2$-SiO$_2$ dense body was heated to 1,700°C in an argon atmosphere by using a carbon furnace to obtain a transparent TiO$_2$-SiO$_2$ glass body (step (c)).

The obtained transparent TiO$_2$-SiO$_2$ glass body was heated to 1,750°C and formed into a desired shape to obtain a formed TiO$_2$-SiO$_2$ glass body (step (d)).

The obtained transparent TiO$_2$-SiO$_2$ glass body was held at 1,100°C for 10 hours and cooled to 500°C at a rate of 3°C/hr, and then, allowed to cool in the air.

[Example 2]

A TiO$_2$-SiO$_2$ glass body was obtained in the same manner as in Example 1 except for using POCl$_3$ as the glass-forming raw material in place of BCl$_3$.

[Example 3]

A TiO$_2$-SiO$_2$ glass body was obtained in the same manner as in Example 1 except for using SCl$_2$ as the glass-forming raw material in place of BCl$_3$.

[Example 4]

A TiO$_2$-SiO$_2$ glass body was obtained in the same manner as in Example 1 except for changing the amount of BCl$_3$ supplied such that the content of B$_2$O$_3$ in the obtained TiO$_2$-SiO$_2$ glass takes the value shown in Table 1.

[Example 5]

A TiO$_2$-SiO$_2$ glass body was obtained in the same manner as in Example 1 except for using sodium tetrabutoxide as the glass-forming raw material in place of BCl$_3$.

The contents of individual components in the TiO$_2$-SiO$_2$ glass bodies obtained in Examples 1 to 5 are shown in Table 1. In the Table, the unit of the content is mass%. Also, in each TiO$_2$-SiO$_2$ glass body, apart from the components shown in the Table, the balance is SiO$_2$.

The TiO$_2$ concentration was determined by a fundamental parameter (FP) method using a fluorescent X-ray. The contents of B$_2$O$_3$, P$_2$O$_5$ and Na$_2$O were determined by ICP mass spectrometry. The S content was determined by ion chromatography.

Also, with respect to the TiO$_2$-SiO$_2$ glass bodies obtained in Examples 1 to 5, the viscosity of the glass was measured by a beam bending method with a method in accordance with JIS R 3103-2:2001, and the temperature at which the viscosity $\eta$ of the glass became 10$^{13}$ dPa·s was taken as the annealing temperature. The results are shown in Table 1. In addition, with respect to the TiO$_2$-SiO$_2$ glass bodies obtained in Examples 1 to 5, the presence or absence of crystallization was confirmed with a visual inspection. The results are shown in Table 1.

[Table 1]

|  | Example 1 | Example 2 | Example 3 | Example 4 | Example 5 |
|---|---|---|---|---|---|
| TiO$_2$ | 7.6 | 7.2 | 6.9 | 6.9 | 6.9 |
| B$_2$O$_3$ | 0.3 | 0 | 0 | 0.09 | 0 |
| P$_2$O$_5$ | 0 | 0.5 | 0 | 0 | 0 |

(continued)

|  | Example 1 | Example 2 | Example 3 | Example 4 | Example 5 |
|---|---|---|---|---|---|
| S | 0 | 0 | 0.1 | 0 | 0 |
| $Na_2O$ | 0 | 0 | 0 | 0 | 0.1 |
| Annealing Temperature (°C) | 1075 | 1080 | 1090 | 1095 | 1090 |
| Crystallization | none | none | none | none | observed |

As apparent from Table I, in the $TiO_2$-$SiO_2$ glass bodies of Examples 1 to 4 where $B_2O_3$, $P_2O_5$ or S was contained as a component for reducing the viscosity of the glass, the annealing temperature was at the same level as that of the $TiO_2$-$SiO_2$ glass body of Example 5 where $Na_2O$ was contained, revealing that the addition of $B_2O_3$, $P_2O_5$ or S is effective in reducing the viscosity of the glass. In the $TiO_2$-$SiO_2$ glass body of Example 5, crystallization of glass, giving rise to devitrification, was confirmed, but in the $TiO_2$-$SiO_2$ glass bodies of Examples 1 to 4, crystallization of glass was not observed.

While the invention has been described in detail and with reference to specific embodiments thereof, it will be apparent to one skilled in the art that various changes and modifications can be made therein without departing from the spirit and scope of the invention.

This application is based on Japanese Patent Application No. 2009-273340 filed on December 1, 2009, the contents of which are incorporated herein by way of reference.

**Claims**

1.    A $TiO_2$-containing silica glass containing $TiO_2$ in an amount of from 5 to 10 mass% and at least one of $B_2O_3$, $P_2O_5$ and S in an amount of from 50 ppb by mass to 5 mass% in terms of the total content.

2.    The $TiO_2$-containing silica glass according to claim I, having an annealing temperature of 1,100°C or lower and an OH concentration of 600 ppm or less.

3.    The $TiO_2$-containing silica glass according to claim 1 or 2, having a standard deviation (dcv[$\sigma$]) of a stress generated by striae of 0.03 MPa or less.

4.    The $TiO_2$-containing silica glass according to any one of claims 1 to 3, having a difference ($\Delta\sigma$) between the maximum value and the minimum value of a stress generated by striae of 0.20 MPa or less.

5.    An optical member for EUV lithography, using the $TiO_2$-containing silica glass according to any one of claims 1 to 4.

FIG. 1

## INTERNATIONAL SEARCH REPORT

| International application No. |
| --- |
| PCT/JP2010/070944 |

A. CLASSIFICATION OF SUBJECT MATTER
*C03C3/06*(2006.01)i, *C03B20/00*(2006.01)i, *C03C3/089*(2006.01)i, *C03C3/097*(2006.01)i, *G03F1/16*(2006.01)i, *H01L21/027*(2006.01)i

According to International Patent Classification (IPC) or to both national classification and IPC

B. FIELDS SEARCHED

Minimum documentation searched (classification system followed by classification symbols)
C03C1/00-14/00, C03B20/00

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)
INTERGLAD

C. DOCUMENTS CONSIDERED TO BE RELEVANT

| Category* | Citation of document, with indication, where appropriate, of the relevant passages | Relevant to claim No. |
| --- | --- | --- |
| X<br>Y | US 4200445 A   (CORNING GLASS WORKS),<br>29 April 1980 (29.04.1980),<br>example 8-A<br>(Family: none) | 1-4<br>5 |
| X<br>Y | JP 05-058650 A   (Tokuyama Soda Co., Ltd.),<br>09 March 1993 (09.03.1993),<br>claims<br>(Family: none) | 1-4<br>5 |
| Y | JP 2008-100891 A   (Covalent Materials Corp.),<br>01 May 2008 (01.05.2008),<br>paragraph [0001]<br>& US 2008/0096756 A1 | 5 |

| ☒ | Further documents are listed in the continuation of Box C. | ☐ | See patent family annex. |
| --- | --- | --- | --- |

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>12 January, 2011 (12.01.11) | Date of mailing of the international search report<br>25 January, 2011 (25.01.11) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/070944 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2007-182367 A (Shin-Etsu Chemical Co., Ltd.), 19 July 2007 (19.07.2007), claims & US 2007/0134566 A1 & EP 1795506 A1 | 5 |
| Y | JP 2004-315351 A (Asahi Glass Co., Ltd.), 11 November 2004 (11.11.2004), claims & US 2005/0245383 A1 & EP 1608599 A1 & WO 2004/089838 A1 | 5 |
| A | JP 2004-021089 A (Asahi Glass Co., Ltd.), 22 January 2004 (22.01.2004), claims (Family: none) | 1-5 |
| A | US 4902426 A (Pedro B. MACEDO), 20 February 1990 (20.02.1990), table 5 (Family: none) | 1-5 |

Form PCT/ISA/210 (continuation of second sheet) (July 2009)

**REFERENCES CITED IN THE DESCRIPTION**

**Patent documents cited in the description**

- JP 2008037743 A
- JP 63024973 B

- JP 2009273340 A

**Non-patent literature cited in the description**

- **J.P. WILLIAMS et al.** *American Ceramic Society Bulletin,* 1976, vol. 55 (5), 524